Europäisches Patentamt

European Patent Office

Office européen des brevets

(11) Veröffentlichungsnummer: **0 237 858 B1**

(19)

(12) **EUROPÄISCHE PATENTSCHRIFT**

(45) Veröffentlichungstag der Patentschrift: **09.12.92**

(21) Anmeldenummer: **87102889.0**

(22) Anmeldetag: **28.02.87**

(51) Int. Cl.⁵: **B23B 31/12**

(54) **Bohrfutter.**

(30) Priorität: **20.03.86 DE 3609339**

(43) Veröffentlichungstag der Anmeldung:
**23.09.87 Patentblatt 87/39**

(45) Bekanntmachung des Hinweises auf die
Patenterteilung:
**09.12.92 Patentblatt 92/50**

(84) Benannte Vertragsstaaten:
**CH DE FR GB LI**

(56) Entgegenhaltungen:
**DE-A- 3 338 141**
**FR-A- 2 417 363**
**GB-A- 2 030 485**
**GB-A- 2 146 940**

(73) Patentinhaber: **ROBERT BOSCH GMBH**
**Postfach 30 02 20**
**W-7000 Stuttgart 30(DE)**

(72) Erfinder: **Baumann, Otto**
**Weingarterstrasse 24**
**W-7022 Leinfelden-Echterdingen(DE)**
Erfinder: **Müller, Rolf, Dipl.-Ing.**
**Manosquerstrasse 21**
**W-7022 Leinfelden-Echterdingen(DE)**
Erfinder: **Reibetanz, Wilbert, Ing.**
**Keltenstrasse 5**
**W-7022 Leinfelden-Echterdingen(DE)**
Erfinder: **Wanner, Karl, Dipl.-Ing.**
**Moltkestrasse 10**
**W-7022 Leinfelden-Echterdingen(DE)**

## Beschreibung

Die Erfindung geht aus von einem hammerfesten Bohrfutter nach der Gattung des Hauptanspruchs.

Aus der GB-A 21 46 940 ist ein solches Bohrfutter bekannt geworden, bei dem ein permanent von einer Feder belasteter Riegel einem unbeabsichtigten Verdrehen des Zahnkranzes entgegenwirken soll. Die Feder ist dabei radial außerhalb des Futterkörpers zwischen diesem und einer Stellhülse angeordnet. Die Konstruktion benötigt daher einen erhöhten Platzbedarf und erfordert außerdem wegen des ständig unter Federkraft stehenden Riegels einen erhöhten Kraftaufwand beim Verstellen des Futters.

Es ist aus der DE-OS 28 42 783 ein weiteres Bohrfutter bekannt, dessen Stellring für die Futterbacken während des Betriebs mittels einer Hülse gegen Verdrehen gesichert ist, die durch eine einzelne, den Bohrfutterkörper umgebende Druckfeder in einer Raststellung gehalten wird. Die Druckfeder ist dabei so weit außen und vom werkzeugseitigen Ende entfernt angebracht, daß die Futterbacken in ihrer Bewegung nicht behindert werden und die Futtereinstellglieder in ihrer Funktion nicht beeinträchtigt sind. Diese Anordnung führt daher zu einer zusätzlichen Vergrößerung der Baulänge und des Umfangs des Futters, was insbesondere bei kleinen Bohrhämmern unerwünscht ist.

Vorteile der Erfindung

Das erfindungsgemäße Bohrfutter mit den kennzeichnenden Merkmalen des Hauptanspruchs ist demgegenüber platzsparend gebaut und bei unverändertem Spannbereich deutlich kürzer in der Baulänge ohne Vergrößerung des Umfangs des Futters. Zusätzlich ergibt sich eine Gewichts- und Materialeinsparung. Ein kurz bauendes Spannfutter ist insbesondere bei leichten Bohrhämmern von Vorteil, die damit handlicher werden und auch noch bei beengten Platzverhältnissen eingesetzt werden können. Darüber hinaus ist das Futter sehr bedienungsfreundlich. Es läßt sich mit wenigen einfachen Handgriffen verstellen und verriegeln. Durch die in den Unteransprüchen aufgeführten Maßnahmen ist eine vorteilhafte Weiterbildung und Verbesserung des im Hauptanspruch angegebenen Bohrfutters möglich.

Zeichnung

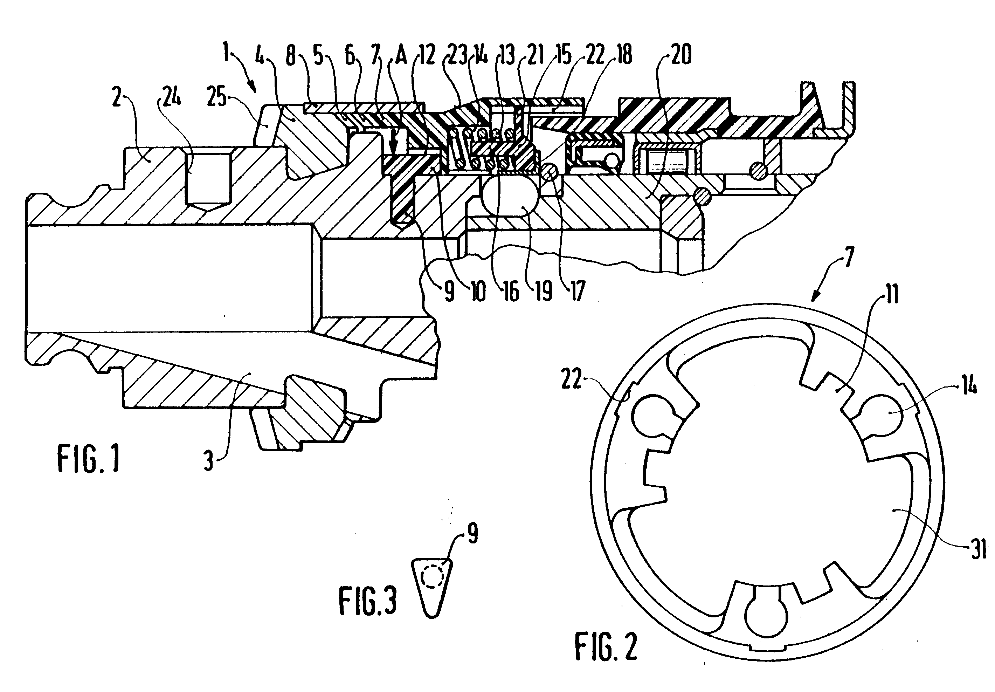

Ein Ausführungsbeispiel der Erfindung ist in der Zeichnung dargestellt und in der nachfolgenden Beschreibung näher erläutert. Figur 1 zeigt das Bohrfutter im Längsschnitt. Figur 2 zeigt die Sicherungshülse als Einzelteil von der dem Werkzeug abgewandten Seite des Bohrfutters aus in Draufsicht. Figur 3 zeigt den Stift 9 aus Blickrichtung A in Figur 1.

Beschreibung des Ausführungsbeispieles

In dem Bohrfutterkörper 2 des Bohrfutters 1 sind mehrere, vorzugsweise drei nicht gezeigte Backen in Führungen 3 geführt. Die Backen sind über einen als Zahnranz ausgebildeten Einstellring 4 verstellbar und können Werkzeugschäfte verschiedenen Durchmessers spannen. Der Einstellring 4 weist auf seiner dem Werkzeug abgewandten (hinteren) Seite eine Verzahnung 5 auf, in die die Verzahnung 6 der Sicherungshülse 7 eingreift. Diese wird teilweise durch die mit dem Einstellring 4 verbundene Griffhüle 8, mit der das Futter von Hand verstellt werden kann, überdeckt. Am Futterkörper 2 sind zwischen den Führungen 3 Steckstifte 9 (siehe auch Figur 3) angebracht, deren Nasen 10 zum Verstellen des Futters in Rasttaschen 12 der Sicherungshülse 7 eingreifen.

Die Sicherungshülse 7 wird durch die Druckfedern 13, die in hinter den Rasttaschen 12 angeordnete Taschen 14 der Sicherungshülse 7 eingreifen, nach vorne gegen den Einstellring 4 gedrückt. Als Gegenlager für die Druckfeder 13 dient die Stützscheibe 15, deren Fortsätze 16 in das Innere der Druckfedern 13 eingreifen. Die Fortsätze 16 sind etwas länger als die Blocklänge der Druckfedern 13, so daß die Fortsätze 16 beim Bewegen der Sicherungshülse 7 gegen die Kraft der Federn 13 als Anschlag dienen. Die Stützscheibe 15 wird hinten von dem Sicherungsring 17 gehalten. An der Innenseite der Stützscheibe 15 ist ein Metallring 18 angebracht, der den Verriegelungskörper 19 hält, der die Verbindung des Bohrfutterkörpers 2 mit der Rasthülse 20 der Handwerkzeugmaschine axial fixiert. Die Stützscheibe 15 weist an ihrem Umfang Fortsätze 21 auf, die in Nuten 22 der Sicherungshülse 7 eingreifen, wodurch diese in Achsrichtung verschiebbar und mit der Stützscheibe 15 drehfest verbunden ist.

Die Sicherungshülse 7 befindet sich in Figur 1 in entriegelter Stellung, das heißt deren Verzahnung 6 steht mit der Verzahnung 5 des Einstellrings 4 nicht in Eingriff, so daß die Futterbacken durch Drehen von Hand an der Griffhülse 8 oder mit einem in die Bohrung 24 einsteckbaren nicht gezeigten Futterschlüssel, der in die Verzahnung 25 eingreift, verstellt werden kann. Zur Verriegelung wird die Sicherungshülse 7 an der Abschrägung 23 ergriffen und von dem Einstellring 4 weg kurz nach hinten gezogen und um etwa 30 Grad nach rechts gedreht, so daß die Nasen 10 der Stifte 9 in die Nuten 11 (siehe Figur 2) des Sicherungsrings 7 eingreifen. Jetzt wird die Verzahnung 6 durch die Kraft der Federn 13 formschlüssig gegen die Verzahnung 5 gedrückt, womit der Einstellring 4 drehfest gegenüber den Futterbacken und dem Futterkörpen 2 arretiert ist und sich das Futter weder öffnen noch zustellen kann.

Zum Entriegeln der Sicherungshülse 7 wird diese vom Einstellring 4 weg nach hinten gezogen und nach links gedreht, so daß die Nasen 10 wieder in die Rasttaschen 12 einrasten und die Verzahnungen 5, 6 außer Eingriff kommen.

Statt als Zahnkranz kann der Einstellring in einer anderen nicht dargestellten Ausführungsform auch als Stellhülse ausgebildet sein, mit der sich eine um die Futterbacken herum angeordnete Konushülse gegenüber den am Futterkörper radial verschieblichen Futterbacken axial verschieben läßt, um die Spannweite der Futterbacken zu verändern.

Bohrfutterkörper 2 und Rasthüle 20 können statt zweiteilig auch einstückig ausgebildet sein. Dann fallen die Verriegelungskörper 19 und der Metallring 18 weg.

In Figur 2 ist die Sicherungshülse 7 mit den Taschen 14 und den daneben angeordneten beidseitig offenen Nuten 11 gezeigt. Die Rasttaschen 12 liegen in dieser Darstellung hinter den Taschen 14 und sind nicht sichtbar. Am Außenumfang sind drei Nuten 22 zur Führung der Fortsätze 21 angeordnet; es können jedoch auch mehr oder weniger Nuten vorgesehen werden. Die Ausnehmungen 31 dienen der Aufnahme der Futterbacken und sind breiter als diese, damit sich die Sicherungshülse 7 zur Ver- und Entriegelung gegenüber den Futterbacken drehen läßt.

**Patentansprüche**

1. Futter für Handwerkzeugmaschinen, insbesondere Bohr- und/oder Schlaghammer, mit mehreren, mittels eines Einstellrings (4) mit Griffhülse (8) auf unterschiedliche Durchmesser von in das Futter einzusetzenden Werkzeugschäften einstellbaren Futterbacken, deren Stellung durch zwischen zwei Axialstellungen verschiebliche Sicherungsmittel (7) fixiert werden kann, welche durch mehrere zwischen den Futterbacken angeordnete Druckfedern (13) gegen den Einstellring (4) gepreßt werden, dadurch gekennzeichnet, daß die Sicherungsmittel als eine wie die Griffhülse (8) von Hand bedienbare und mit dem Einstellring drehfest verbindbare Sicherungshülse (7) ausgebildet ist, an der die Druckfedern (13) einerseits anliegen, während sie andererseits an einer Stützscheibe (15) abgestützt sind, die in die Druckfedern (13) zentral eingreifende Fortsätze (16) aufweist.

2. Futter nach Anspruch 1 dadurch gekennzeichnet, daß die Fortsätze (21) in in axialer Richtung angeordnete Nuten (22) der Sicherungshülse (7) eingreifen, wodurch diese in Achsrichtung verschiebbar aber drehfest mit der Stützscheibe (15) verbunden ist.

3. Futter nach Anspruch 1 gekennzeichnet, daß die Stützscheibe (15) aus Kunststoff besteht und einen Metallring (18) aufweist, der der Fixierung von Verriegelungskörpern (19) dient.

4. Futter nach Anspruch 1 dadurch gekennzeichnet, daß die Stützscheibe (15) ganz aus Metall besteht und ein Guß-, Sinter-, Stanz- oder Biegeteil ist.

5. Futter nach Anspruch 1 dadurch gekennzeichnet, daß die Anlageflächen der Federn (13) sich axial hinter den Rasttaschen (12) für die Arretierstellung der Sicherungshülse (7) befinden, in welcher Stellung der Einstellring (4) verdrehbar ist.

**Claims**

1. Chuck for powered hand tools, in particular hammer drills and/or percussion hammers, having a plurality of chuck jaws which can be set by means of a setting ring (4) having a grip sleeve (8) to different diameters of tool shanks to be inserted into the chuck and the position of which can be fixed by retaining means (7) which are displaceable between two axial positions and are pressed against the setting ring (4) by a plurality of compression springs (13) arranged between the chuck jaws, characterised in that the retaining means is designed as a retaining sleeve (7) which can be operated by hand like the grip sleeve (8) and can be connected to the setting ring in such a way as to be fixed in terms of rotation and on which the compression springs (13) bear on one side, while they are supported on the other side on a supporting disc (15) which has extensions (16) reaching centrally into the compression springs (13).

2. Chuck according to Claim 1, characterised in that the extensions (21) engage in grooves (22) of the retaining sleeve (7) which are arranged in the axial direction, as a result of which the retaining sleeve (7) is connected to the supporting disc (15) in such a way as to be displaceable in the axial direction but fixed in terms of rotation.

3. Chuck according to Claim 1, characterised in that the supporting disc (15) is made of plastic and has a metal ring (18) which serves to fix the locking bodies (19).

4. Chuck according to Claim 1, characterised in that the supporting disc (15) is made entirely of metal and is a cast, sintered, punched or bend part.

5. Chuck according to Claim 1, characterised in that the bearing surfaces of the springs (13) are located axially behind the catch pockets (12) for the locking position of the retaining sleeve (7), in which position the setting ring (4) can be rotated.

**Revendications**

1. Mandrin pour machines outils à main, en particulier des marteaux de forage et/ou des marteaux de démolition, avec plusieurs mors de mandrin pouvant être réglés au moyen d'une bague de réglage (4) avec une douille de prise (8) aux diamètres différents des tiges d'outil à monter dans le mandrin, mors dont la position peut être fixée par des moyens de blocage (7), déplaçables entre deux positions axiales, moyens qui sont pressés par plusieurs ressorts de pression (13) disposés entre les mors du mandrin contre la bague de réglage (4), mandrin caractérisé en ce que le moyen de blocage est constitué comme une bague de blocage (7) pouvant être actionnée à la main comme la douille de prise (8) et être reliée sans pouvoir tourner à la bague de réglage, bague de blocage sur laquelle d'une part les ressorts de pression (13) reposent, tandis que d'autre part ils s'appuient sur une rondelle d'appui (15), qui présente des prolongements (16) venant au centre en prise dans les ressorts de pression (13).

2. Mandrin selon la revendication 1, caractérisé en ce que les appendices (21) viennent en prise dans des rainures (22) de la douille de blocage (7) disposée dans le sens axial, grâce à quoi celle-ci peut être déplacée dans le sens axial mais est reliée sans pouvoir tourner à la rondelle d'appui (15).

3. Mandrin selon la revendication 1, caractérisée en ce que la rondelle d'appui (15) est en matière plastique et présente une bague métallique (18) qui sert à la fixation des corps de verrouillage (19).

4. Mandrin selon la revendication 1, caractérisé en ce que la rondelle d'appui (15) est entièrement en métal et est une pièce de fonderie, une pièce frittée, une pièce estampée en une pièce pliée.

5. Mandrin selon la revendication 1, caractérisé en ce que les surfaces d'appui des ressorts (13) se trouvent axialement derrière les alvéoles d'encliquetage (12) pour la position d'arrêt de la douille de blocage (7), position dans laquelle la bague de réglage (4) peut être tournée.

FIG.1

FIG.3

FIG. 2

EP 0 237 858 B1